# EUROPEAN PATENT APPLICATION

(11) **EP 1 378 526 A1**
(43) Date of publication of application: **07.01.2004**
(21) Application number: 03015084.1
(22) Date of filing: 03.07.2003
(51) Int. Cl.: C08F 8/18, C09D 5/16

(54) **Partially fluorinated acrylic copolymers and their use as coatings, in particular antifouling coatings**

(30) Priority: 04.07.2002 IT TO20020583
(71) Applicant: UNIVERSITA DEGLI STUDI DI GENOVA, I-16126 Genova (IT); Consorzio Interuniversitario Nazionale Per La Scienza E La Tecnologia Dei Materiali (INSTM), I-50121 Firenze (IT)
(72) Inventor: Casazza, Elena, 16148 Genova (IT); Piacenti, Franco, Deceased (IT); Russo, Saverio, 16166 Genova (IT)
(74) Representative: Rambelli, Paolo

(57) **Abstract**

Novel, partially fluorinated acrylic copolymers of formula: 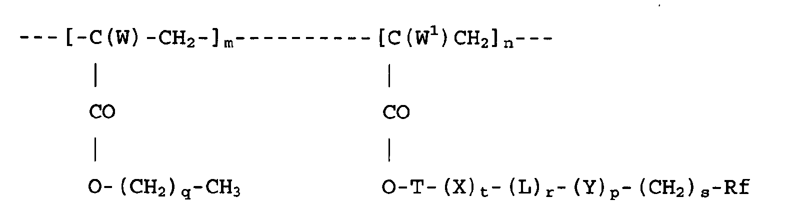 wherein W is -CH₃ or -H, W¹ is -CH₃ or -H, m is an integer between 10 and 2000, n is an integer between 1 and 100, q is an integer between 0 (zero) and 17, t is 0 (zero) or 1, r is 0 (zero) or 1, p is 0 (zero) or 1, s is 0 (zero) or 1, T is an organic spacer constituted by an aliphatic hydrocarbon chain with from 1 to 6 carbon atoms and/or by a cycloaliphatic and/or aromatic structure, X is an ester, urethane, or amido group, L is an organic spacer constituted by an aliphatic hydrocarbon chain with from 1 to 6 carbon atoms and/or by a cycloaliphatic and/or aromatic structure, Y is an ester, urethane, or amido group, Rf is a perfluoroalkyl radical with from 1 to 7 carbon atoms or a perfluoropolyether radical formed by -CF₂-O- and/or -CF₂-CF₂-O-, and/or -CF(CF₃)-CF₂-O- units, as well as a terminal halogen or hydrogen atom, are described.

## Description

The present invention relates to novel, partially fluorinated acrylic copolymers and to their use as paints, varnishes, or protective coatings and, in particular, to antifouling and water-repellent coatings for boats.

The surfaces of boats that are exposed to sea, lake and river water undergo degradation caused by the water itself, by pollutants, and by the micro-organisms contained in the water.

Protective agents are used to protect these surfaces and can impart to the surfaces antifouling and water-repellence properties and resistance to the most common pollutants.

A good protective agent should also be chemically inert with respect to the material to be protected, without affecting or only minimally affecting its colour, as well as having characteristics of chemical resistance to the gases that are in the atmosphere, and resistance to solar radiation.

Known protective agents, and antifouling paints in particular, typically incorporate compounds such as cuprous oxide or organometallic derivatives of tin which are toxic to many aquatic forms of life and must be replaced by non-toxic protective agents. However, the products based on non-toxic protective agents which have been tested up to now have not been found wholly satisfactory.

The present invention now provides novel, partially fluorinated acrylic copolymers which have all of the characteristics indicated above which are essential for protective agents and which can also impart particularly good antifouling and water-repellence properties to the surfaces to be protected.

Such copolymers are therefore extremely suitable for use as protective agents to be applied to the surfaces of boats that are exposed to the water, in particular as protective paints, varnishes, or surface coatings for boats.

The partially fluorinated acrylic copolymers of the present invention have formula (I): 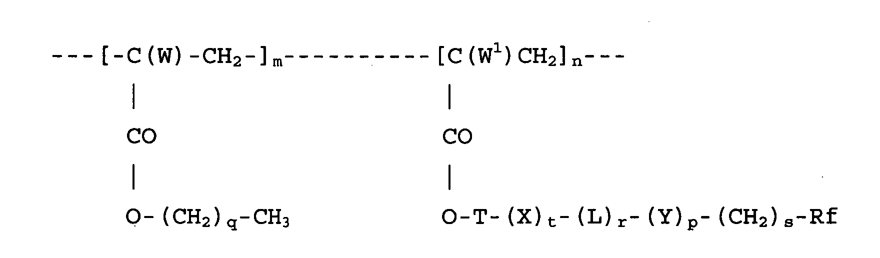 wherein
W is -CH₃ or -H,
W¹ is -CH₃ or -H,
m is a integer between 10 and 2000,
n is a integer between 1 and 100,
q is a integer between 0 (zero) and 17,
t is 0 (zero) or 1,
r is 0 (zero) or 1,
p is 0 (zero) or 1,
s is 0 (zero) or 1,
T is an organic spacer constituted by an aliphatic hydrocarbon chain with from 1 to 6 carbon atoms and/or by a cycloaliphatic and/or aromatic structure,
X is an ester, urethane, or amido group,
L is an organic spacer constituted by an aliphatic hydrocarbon chain with from 1 to 6 carbon atoms and/or by a cycloaliphatic and/or aromatic structure,
Y is an ester, urethane, or amido group,

Rf is a perfluoroalkyl radical with from 1 to 7 carbon atoms or a perfluoropolyether radical formed by -CF₂-O- and/or -CF₂-CF₂-O-, and/or -CF(F₃)-CF₂-O- units, as well as by a terminal halogen or hydrogen atom.

The terminal groups of the copolymers of formula (I) of the present invention are not indicated in the formulae given since their chemical nature has no effect on the properties of the copolymers and, moreover, it varies in dependence on the conditions of the preparation reaction used.

Analysis of the copolymers obtained has in fact shown that the terminal groups may be radical residues of the initiator used, and/or radical residues of the solvent and/or of the chain transfer agent, as well as -H or -CH=CH₂ groups.

In formula (I) indicated above, T is preferably -CH₂-CH₂-, L is preferably -CH₂-CH₂-CH₂-CH₂-CH₂-CH₂-, and Rf is preferably F(CF(CF₃)CF₂O)₁₂-(CF(CF₃))ᵤ-CF₂-, wherein u is 0 (zero) or 1.

A partially fluorinated copolymer which is particularly preferred according to the present invention is the copolymer of formula (Ia): 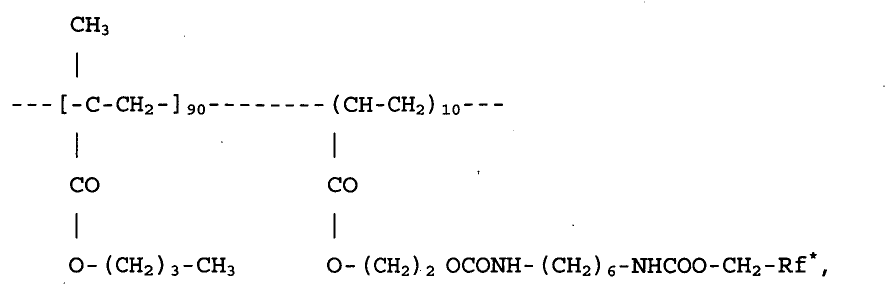 wherein Rf* is F (CF (CF₃) CF₂O)₁₂-CF (CF₃) -CF₂-.

The partially fluorinated acrylic copolymers of the present invention can be prepared by a method comprising reacting an acrylic copolymer of formula (II): 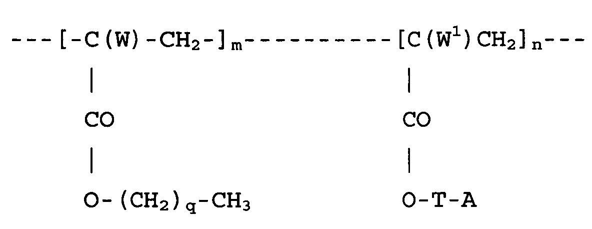 wherein W, W¹, m, n, q and T have the same meanings as in formula (I) and A is -OH or -NH₂,
with a compound of formula (III):

Rf-(CH₂)ₛ-(Y)ₚ-(L)ᵣ-B

wherein Rf, Y, L, s, p and r have the same meanings as in formula (I) and B is -NCO or -COOH.

For example, the copolymer of formula (Ia) illustrated above can be produced from the acrylic copolymer:

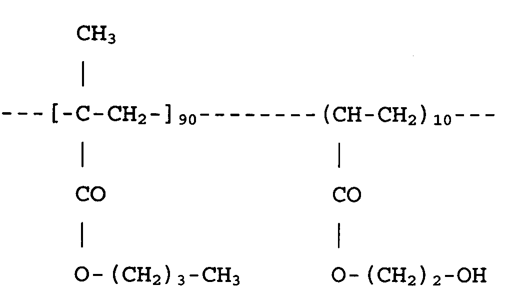

Examples 1-4 below describe the preparation of partially fluorinated acrylic copolymers which fall within the scope of the invention and which are referred to as EM1Rf* and EM1-PFO, respectively.

Example 5, on the other hand, describes experimental tests performed to examine the water-repellence and antifouling properties of the copolymers EM1Rf^{*} and EM1-PFO, as well as those of a corresponding non-fluorinated copolymer, indicated schematically as Q-CH₂-OH, which was used as a reference compound. The comparison between the data obtained shows clearly that the partially fluorinated acrylic copolymers of the invention have notable antifouling and water-repellence properties, in contrast with the corresponding non-fluorinated copolymer which does not have any specific protective effect.

The following examples are provided for illustrative purposes and are not intended to limit the scope of the invention in any way.

### Example 1

### General preparation of acrylic copolymers

A mixture of a quantity of between 95 and 70 g of n-butyl methacrylate (BMA) and a quantity of between 5 and 30 g of 2-hydroxyethyl acrylate (HEA) was diluted with tetrahydrofuran (THF); after the addition of 0.5-2 g of azobisisobutyronitrile (AIBN), the solution was left to polymerize at 50° for 8 hours, the starting composition being restored as appropriate at regular time intervals. It is in fact necessary to keep the starting composition almost unchanged. In a "batch" system, the composition changes over time because of the different reactivities of the two monomers. By determining (e.g. by analytical methods) this preferential consumption over time, it is possible to eliminate this cause of compositional heterogeneity of the copolymer by corrective additions of the two monomers.

The solution was cooled to 20°C and was poured into petroleum ether. The precipitated polymer was dissolved in THF and re-precipitated with methanol to eliminate completely the residual monomers and the other impurities that were present. About 90 g of acrylic copolymer of formula (IV) are obtained: 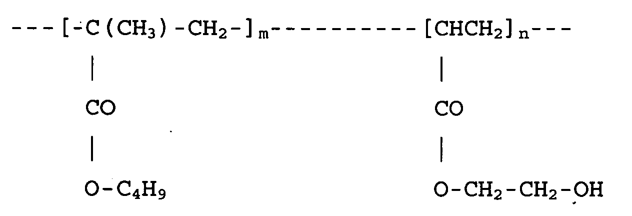 wherein the values of m and n were determined by the composition of the mixture of monomers and by the values of their reactivity ratios. The acrylic copolymers obtained can be characterized in terms of molecular weight, glass transition temperature, and thermal stability.

The copolymers of formula (IV) are indicated schematically as Q-CH₂OH wherein Q represents:

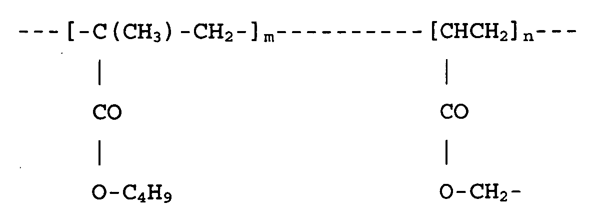

### Example 2

### Preparation of the acrylic copolymer EM1

A mixture of 85 g of BMA and 15 g of HEA was diluted with 300 ml of THF and, after the addition of 1 g of AIBN, the solution was left to polymerize at 50°C for 8 hours, the starting composition being restored ,as appropriate at regular time intervals. The solution was cooled to 20°C and was poured into 3 1 of petroleum ether. The precipitated polymer was dissolved in 300 ml of THF and re-precipitated in 3 1 of methanol. 84 g of copolymer conforming to the general formula Q-CH₂-OH (see formula (IV) of Example 1), having an average numerical molecular weight of 88000 and a glass transition temperature of about 26°C, was obtained.

This copolymer was named EM1.

### Example 3

### Grafting of a perfluoropolyether with isocyanic functionality onto the copolymer EM1

A compound derived from a commercial perfluoropolyether having alcoholic functionality and indicated schematically as:

Rf*-CH₂-OH

wherein Rf* is F (CF (CF₃) CF₂O)₁₂-CF (CF₃) -CF₂-,
was reacted with hexamethylene diisocyanate, that is, a reagent capable of introducing a free or blocked isocyanic function, to give the compound of formula (V):

Rf*-CH₂OCONH-(CH₂)₆-NCO

Ten grams of the copolymer EM1 obtained in accordance with Example 2 was dried under vacuum at 30°C and then dissolved in 300 ml of THF. An approximately stoichiometric quantity of Rf*-CH₂OCONH-(CH₂)₆-NCO, dissolved or finely dispersed in 5 ml of THF in the presence of 0.01 g of diisobutyl tin dilaurate (DBTDL), was added to the solution of EM1 which was heated to 60°C in an anhydrous environment for 2 hours, cooled to 4°C, and then poured into 1 l of petroleum ether (40-60°C) to give the graft polymer of formula (VI):

Rf*-CH₂OCONH- (CH₂)₆-NHCOO-CH₂-Q,

wherein Q is as defined in Example 1.

The fact that the reaction had taken place was confirmed by FT-IR spectrum which showed the disappearance of the bands relating to the hydroxyl groups of Q-CH₂-OH and of those of the isocyanic groups at 2250 cm⁻¹. The ¹H-NMR spectrum had the signal of the methylene group Q-CH₂-O- at 4.4 ppm.

The graft copolymer (VI) obtained had two Tgs: one relating to the Rf- sequence at about -70°C and one at 25°C relating to the acrylic copolymer Q-CH₂-OH.

This graft copolymer is referred to as EM1Rf*.

### Example 4

### Method of grafting perfluoro-octanoic sequences onto the copolymer EM1

Perfluoro-octanoic acid was reacted with a large excess of thionyl chloride (1:20), operating under nitrogen. The solution obtained was heated to 90°C for two hours with refluxing and was then cooled. Two quite distinct layers were formed. The two completely immiscible phases were separated.

The lower phase, which contained perfluoro-octanoyl chloride (PFOC1) was subjected to treatment with nitrogen to eliminate traces of residual thionyl chloride.

The copolymer EM1 of Example 2 was dissolved in THF to give a 3% by weight solution. The solution was reacted with the stoichiometric quantity of PFOC1 in the presence of pyridine, also in stoichiometric quantity, for 10 hours, in the presence of nitrogen. The cloudy mixture obtained was filtered. The clear liquid obtained was poured into petroleum ether at 0°C. The polymer precipitated was dissolved in ethyl ether and was then washed with aqueous sodium bicarbonate solution; the solution was evaporated to give the graft polymer (VII):

CF₃-(CF₂)₆-COO-CH₂-Q

This graft polymer is referred to as EM1-PFO.

### Example 5

### Water-repellence tests and evaluation of antifouling properties

A 15% solution of EM1Rf* (obtained in accordance with Example 3) in THF was prepared. This solution was sprayed onto a Perspex sheet by means of a paint sprayer.

After evaporation of the solvent and drying, water-repellence was assessed by measuring the contact angle (theta) both on recently prepared sheets and on sheets after prolonged immersion (12 months) in sea water, after washing with distilled water and drying.

The same procedure was repeated with 15% solutions of EM1-PFO (obtained in accordance with Example 4) in THF and with 15% solutions of EM1 in THF. The results obtained are given in the following table:

| Sample | Contact angle (theta) |
|---|---|
| ^{a}EM1 | 115° |
| EM1Rf* (recently prepared sheet) | 141° |
| EM1Rf* (sheet after immersion) | 139° |
| EM1-PFO (recently prepared sheet) | 136° |
| EM1-PFO (sheet after immersion) | 129° |

| | |
|---|---|
| ^{a}recently prepared sheet | |

The protective coating under test was found to have good water-repellence with an efficacy which was maintained over time, even after prolonged immersion in sea water.

The antifouling tests were carried out as follows:

### Test 1

Two 18 x 18 cm test samples coated with protective films constituted by the polymers EM1Rf* and EM1-PFO, respectively, were placed in a 150 litre cylinder and immersed in sea water.

The water was circulated at a rate of 2.5 litres/minute. A stirrer in the base of the container created an ascending current of water on the walls. The water struck the test samples at a speed of 0.2 metres/second. The water was kept at a temperature of between 18 and 25°C.

After seven months, the layer of protective film was found to be intact and the slight patina which covered the test sample showed minimal adhesion and was easily removed with a non-abrasive sponge.

### Test 2

Two 18 x 18 cm test samples coated with the protective films indicated in Test 1 (EM1Rf* and EM1-PFO) were placed in harbour waters (marine location of Aregai, province of Imperia, Italy) for 12 months. After this period, the test samples had a 100% covering of vegetation but no encrustations were found. The covering layer was removed with a non-abrasive sponge; the cleaning process does not require removal to a boatyard but can be performed with the boat in the water.

Alternatively, complete removal of the covering layer was achieved simply by movement.

## Claims

1. A partially fluorinated acrylic copolymer of formula: 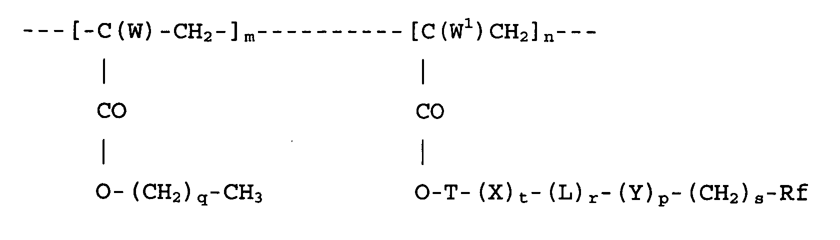 wherein
W is -CH₃ or -H,
W¹ is -CH₃ or -H,
m is an integer between 10 and 2000,
n is an integer between 1 and 100,
q is an integer between 0 (zero) and 17,
t is 0 (zero) or 1,
r is 0 (zero) or 1,
p is 0 (zero) or 1,
s is 0 (zero) or 1,
T is an organic spacer constituted by an aliphatic hydrocarbon chain with from 1 to 6 carbon atoms and/or by a cycloaliphatic and/or aromatic structure,
X is an ester, urethane, or amido group,
L is an organic spacer constituted by an aliphatic hydrocarbon chain with from 1 to 6 carbon atoms and/or by a cycloaliphatic and/or aromatic structure,
Y is an ester, urethane, or amido group,
Rf is a perfluoroalkyl radical with from 1 to 7 carbon atoms or a perfluoropolyether radical formed by -CF₂-O- and/or -CF₂-CF₂-O-, and/or -CF (CF₃) -CF₂-O- units, as well as by a terminal halogen or hydrogen atom.

2. A partially fluorinated acrylic copolymer according to Claim 1 wherein T is -CH₂-CH₂-.

3. A partially fluorinated acrylic copolymer according to Claim 1 or Claim 2 wherein L is -CH₂-CH₂-CH₂-CH₂-CH₂-CH₂-.

4. A partially fluorinated acrylic copolymer according to any one of Claims 1 to 3, wherein Rf is F(CF(CF₃)CF₂O)₁₂-(CF(CF₃))ᵤ-CF₂-, where u is 0 (zero) or 1.

5. A partially fluorinated acrylic copolymer according to Claim 1, of formula: 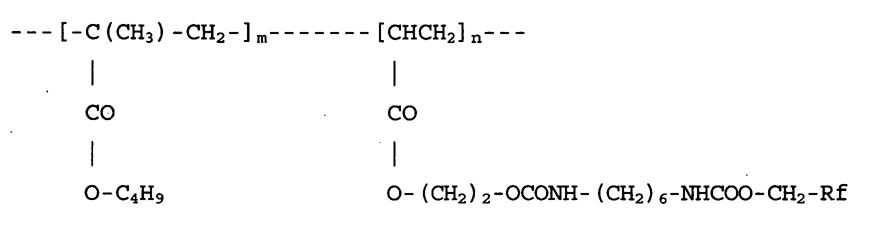 wherein m and n are as defined in Claim 1 and Rf is F(CF(CF₃)CF₂O)₁₂-CF(CF₃)-CF₂-.

6. A partially fluorinated acrylic copolymer according to Claim 1, of formula: 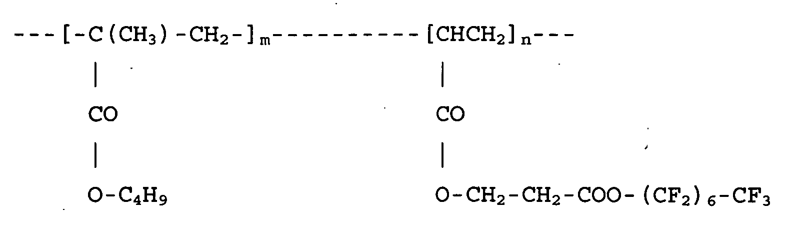 wherein m and n are as defined in Claim 1.

7. A method of preparing a partially fluorinated acrylic copolymer comprising reacting an acrylic copolymer of formula: 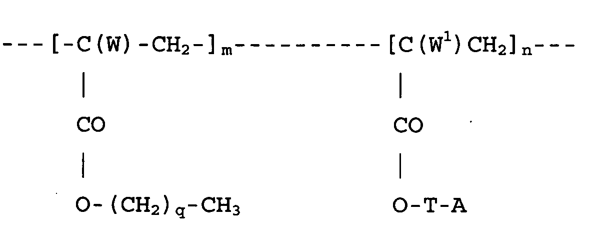 wherein W, W¹, m, n, q and T are as defined in Claim 1 and A is -OH or -NH₂, with a compound of formula:
Rf-(CH₂)ₛ-(Y)ₚ-(L)ᵣ-B
wherein Rf, Y, L, s, p and r are as defined in Claim 1 and B is -NCO or -COOH.

8. Use of a partially fluorinated acrylic copolymer according to any one of Claims 1 to 6 as a protective paint, varnish or surface coating, in particular as an antifouling and water-repellent coating for boats.
